# EUROPEAN PATENT APPLICATION

(11) **EP 3 315 801 A1**
(43) Date of publication of application: **02.05.2018**
(21) Application number: 16817917.4
(22) Date of filing: 28.06.2016
(51) Int. Cl.: F16C 1/26

(54) **FIXING STRUCTURE**

(30) Priority: 29.06.2015 JP 2015130467
(71) Applicant: HI-LEX Corporation, Takarazuka-shi, Hyogo 665-0845 (JP)
(72) Inventor: YOKOMATSU, Mutsuhiro, Takarazuka-shi Hyogo 665-0845 (JP)
(74) Representative: Epping - Hermann - Fischer
(86) International application number: PCT/JP2016/069146
(87) International publication number: WO 2017/002809

(57) **Abstract**

A fixing structure is provided with an outer casing 2 in which at least an end part 2A is hollow, and an outer cap 3 attached to the end part 2A, this structure has a plurality of fixing portions 5 that extend from the outer side of the outer cap 3 to the outer casing 2, wherein the fixing portions 5, which extend in the direction intersecting the thickness direction of the outer casing 2, are provided to both one side and another side in the width direction of the outer casing 2, and it is therefore possible to easily manufacture a fixing structure for fixing a terminal member to an end part of a cylindrical member.

## Description

### Technical Field

The present invention relates to a technique for a fixing structure which fixes a terminal member to an end portion of a cylindrical member.

### Background Art

Techniques for fixing terminal members to end portions of cylindrical members have been publicly known. For example, in a control cable, for the purpose of providing an attachment section to a bracket, a terminal member is fixed to an end portion of an outer casing, which is one form of a cylindrical member. In this fixing structure, a fixing structure by swaging has been publicly known as disclosed, for example, in Patent Literature (hereinafter, referred to as "PTL" 1).

### Citation List

### Patent Literature

PTL 1
Japanese Utility Model (Registration) Application Laid-Open No. H04-004516

### Summary of Invention

### Technical Problem

In the fixing structure in which a terminal member is fixed to an end portion of an outer casing, there is a concern that sliding resistance of an inner cable which is inserted through an insertion hole inside the outer casing may increase because the outer casing may deform in shape by swaging in a case where the terminal member is fixed to the end portion of the outer casing by swaging. For this reason, manufacturing processes need to be carefully performed, and thus, there is a problem in manufacturing workability.

It is therefore an object of the present invention to provide an easily-manufacturable fixing structure for fixing structures which fix terminal members to end portions of cylindrical members.

### Solution to Problem

A fixing structure of the present invention includes a cylindrical member in which at least an end portion is hollow, a terminal member attached to the end portion, and a plurality of fixing portions extending from an outer side of the terminal member to the cylindrical member. The fixing portions extend in a direction intersecting a thickness direction of thickness of the cylindrical member and the fixing portions are provided on one side and another side of a width direction of the cylindrical member.

### Advantageous Effects of Invention

According to a fixing structure of the present invention, because the need for performing accuracy management as strictly as heretofore during manufacturing operations is eliminated, and the fixing structure can be easily manufactured.

### Brief Description of Drawings

FIG. 1 is a side view illustrating an overall configuration of a fixing structure according to an embodiment of the present invention;
FIG. 2 is a cross-sectional view along line A-A of FIG. 1, which illustrates hole portions and hard members;
FIG. 3A is a partially cross-sectional side view of a casing cap according to the embodiment of the present invention, and FIG. 3B is a cross-sectional view likewise along line B-B of FIG. 3A; and
FIG. 4A is a diagram illustrating a first manufacturing process of the fixing structure according to the embodiment of the present invention, and FIG. 4B is a diagram illustrating a second manufacturing process of the same.

### Description of Embodiments

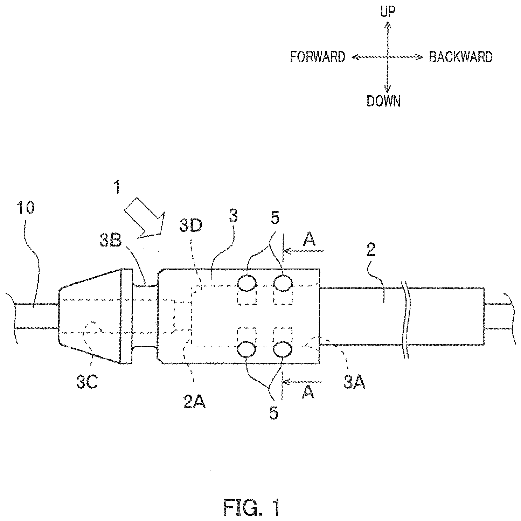

Next, an embodiment of the present invention will be described. First, an overall configuration of a fixing structure according to an embodiment of the present invention will be described using FIG. 1.

The fixing structure according to the present embodiment is a structure which fixes a terminal member to an end portion of a cylindrical member and in which the terminal member is attached so as to cover the end portion of the cylindrical member and fixed.

The fixing structure according to the present embodiment is used in control cable 1. Note that, the fixing structure is not limited to use in control cable 1, and for example, is also used in a structure for fixing a member that seals an end portion of a cylindrical member. Control cable 1 according to the present embodiment includes inner cable 10, outer casing 2, outer cap 3, and fixing portions 5.

The fixing structure in the present embodiment includes a cylindrical member in which at least an end portion is hollow, and a terminal member attached to the end portion, and the fixing structure includes a plurality of fixing portions extending from an outer side of the terminal member to the cylindrical member.

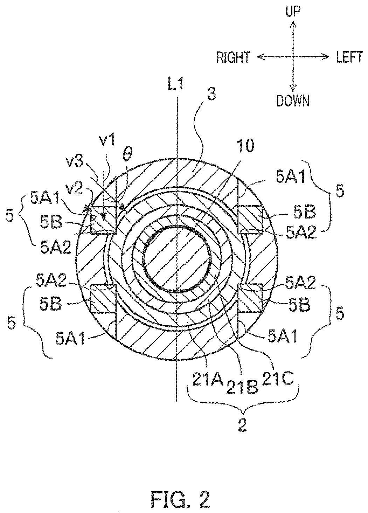

Next, a description of the fixing structure according to the present embodiment will be given with reference to FIGS. 1 to 3B. The cylindrical member is a hollow long member and is configured such that at least an end portion is hollow. In this embodiment, the cylindrical member is formed of outer casing 2. Outer casing 2 is a member in which a cross-section orthogonal to a longitudinal direction is annular. Note that, the configuration of the cylindrical member is not limited to this embodiment, and for example, the cylindrical member may be configured such that the cross-section of the cylindrical member is a polygonal annular shape. Outer casing 2 includes a three-layer structure, and as illustrated in FIG. 2, includes first layer 21A which is formed from resin as an outermost side layer and second layer 21B and third layer 21C. Second layer 21B is made of a coil which is provided such that an outer peripheral surface of the coil is in contact with an inner peripheral surface of first layer 21A. Third layer 21C is provided such that an outer periphery of third layer 21C is in contact with an inner periphery of second layer 21B, and which is formed from resin. An insertion passage is formed on an inner periphery of third layer 21C such that inner cable 10 is inserted through the insertion passage and is slidable inside outer casing 2. Note that, the configuration of the cylindrical member is not limited to the present embodiment, and for example, the cylindrical member may be composed of a cylindrical member formed from only a resin layer.

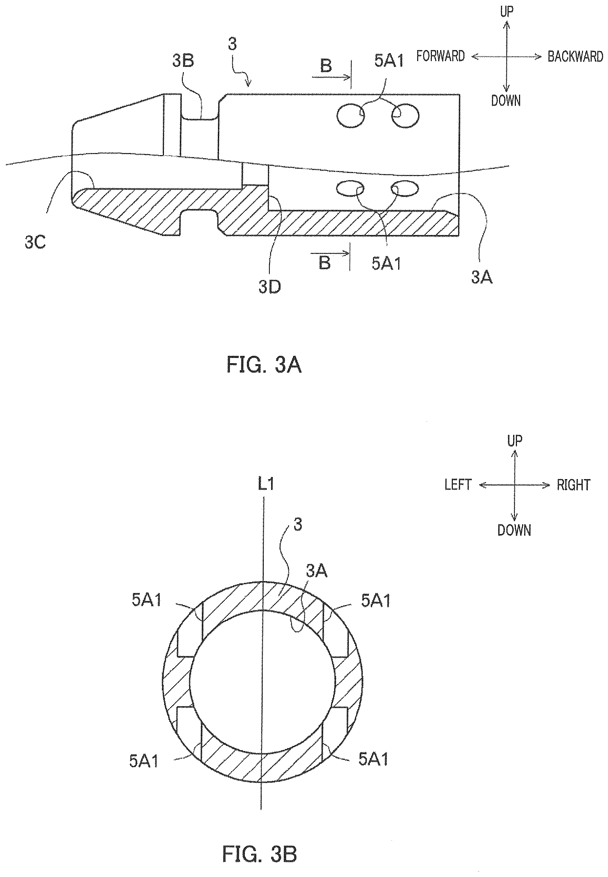

The terminal member is a member attached to the end portion of the cylindrical member, and in this embodiment, as illustrated in FIG. 1, the terminal member is composed of outer cap 3 having a cylindrical shape and attached so as to cover end portion 2A of outer casing 2. Outer cap 3 is formed from a synthetic resin and includes inner-diameter portion 3A for inserting end portion 2A of outer casing 2, attachment portion 3B for attaching the cylindrical member to a bracket (not illustrated) which is an attachment target of the cylindrical member, small-diameter portion 3C, and openings at both ends of outer cap 3, respectively (see also FIG. 3A). Small-diameter portion 3C has a cross-sectional diameter which is smaller than inner-diameter portion 3A, and is provided for inserting inner cable 10. Inner-diameter portion 3A is provided inside outer cap 3 and is a portion forming a cylindrical space having openings at both ends of the space. One of the openings on one end side of inner-diameter portion 3A forms one of the openings on one end side of outer cap 3. Attachment portion 3B is a diameter reduction portion formed in the outer peripheral surface of outer cap 3. Small-diameter portion 3C is provided inside outer cap 3 and is a portion which forms a cylindrical space having openings at both ends of the space, and having a smaller cross-sectional diameter than inner-diameter portion 3A. Openings on the other end side of small-diameter portion 3C constitute an opening portion of outer cap 3. Inner-diameter portion 3A and small-diameter portion 3C are formed such that the opening on the other end side of inner-diameter portion 3A and the opening on one end side of small-diameter portion 3C are communicated with each other. Moreover, contact surface 3D which is to be in contact with end portion 2A of outer casing 2 is provided in end portion on a side of the diameter reduction portion (the other end side). Note that, the configuration of the terminal member is not limited to this embodiment as long as the terminal member is a member which is attachable to an end portion formed in a hollow shape at least among the end portions of the cylindrical member. For example, the terminal member may be configured such that a protrusion is provided in an outer peripheral end portion of a cylindrical member and a recess is provided in an inner peripheral end portion corresponding to the protrusion of the cylindrical member, and the protrusion is fitted into the recess. In this case, an attachment direction of the terminal member with respect to the cylindrical member can be determined.

The fixing portions are portions which extend from an outer side of the terminal member to the cylindrical member and fix the terminal member to be relatively immovable from the cylindrical member. Fixing portion 5, which is a fixing portion in this embodiment, is formed with hole portion 5A and hard member 5B which fills hole portion 5A. Hole portion 5A extends from an outer peripheral surface of outer cap 3, which is the the terminal member, to outer casing 2, which is the cylindrical member, as described later. Outer cap 3 and outer casing 2 are fixed so as to be relatively immovable by a plurality of fixing portions. The outer side of the terminal member is not particularly limited as long as it is a region of the outer side of the terminal member and a fixing portion which extends from the outer side of the terminal member to the cylindrical portion can be formed. Moreover, the term "fixing portion extends to the cylindrical member" means that the fixing portion is formed in the terminal member and part of the cylindrical member. Note that, hole portion 5A is a blind hole and does not reach the insertion passage through which inner cable 10 is inserted. Note that, the term "outer side of the terminal member" refers to a direction of the terminal member with respect to a side of the cylindrical member and does not necessarily mean an outer surface of the terminal member or a space outside the terminal member.

The fixing portions extend in a direction intersecting a thickness direction of thickness of the cylindrical member. At least one of the plurality of fixing portions may be provided on one side of a width direction of the cylindrical member and at least another one of the plurality of fixing portions may be provided on the other side thereof. In this embodiment, fixing portions 5 extend in a direction intersecting the thickness direction of the thickness of outer casing 2 and at least one fixing portion 5 is provided on one side and the other side of the width direction of outer casing 2. More specifically, a plurality of fixing portions 5 are provided. The term "direction intersecting a thickness direction of thickness of outer casing 2" herein means direction v1 which is a direction formed by tilting, at angle θ (0° < θ < 90°)with respect to direction v3, in a case where outer casing 2 is a cylindrical member with annular cross-section, as illustrated in FIG2. The direction v3 is a direction orthogonal to tangential direction v2 of a virtual outer peripheral surface of outer casing 3 at a center of the opening of fixing portion 5. Moreover, the term "width direction of outer casing 2" means a direction orthogonal to a center line of a longitudinal direction of outer casing 2. The terms "one side" and "the other side" mean one side (left side of FIG. 2) and the other side (right side of FIG. 2) with respect to axis line LI, which is orthogonal to the width direction, as the center. Note that, the embodiment illustrated in FIG. 2 is the embodiment in a case where tangential direction v2 is set to be the tangent of the width direction of outer casing 2, and formation of a hole portion is easy for a fixing portion in a case tangential direction v2 is set to be the width direction of outer casing 2.

The fixing portions may be configured such that a direction in which at least one of the fixing portions extends is substantially parallel to the axis line passing through the center of a horizontal cross-section of the cylindrical member or such that the fixing portions extend mutually in the same direction and parallel to each other. In this embodiment, as illustrated in FIG. 2, fixing portions 5 are substantially parallel to axis line L1 which passes through the center of a horizontal cross-section of outer casing 2 and extend mutually in the same direction and parallel to each other. More specifically, hole portions 5A (details will be given later) forming fixing portions 5 are provided substantially parallel to axis line L1 which passes through the center of a horizontal cross-section of outer casing 2 and extend mutually in the same direction and parallel to each other. Hole portions 5A are provided respectively in four positions, upper left, upper right, lower left, and lower right positions in a cross-sectional view as illustrated in FIG. 2. In addition, as illustrated in FIG. 1, hole portions 5A are provided in two rows in the longitudinal direction and provided in eight positions in total. Note that, in this embodiment, the directions in which hole portions 5A extend are identical and parallel to each other, but it is sufficient as long as the direction in which at least one fixing portion extends is substantially parallel to the axis line passing the center of a horizontal cross-section of the cylindrical member, and for example, in a case that one hole portion 5A is in a direction parallel to axis line LI, a configuration that a direction of other hole portions 5A extends in directions different from each other may be employed.

The fixing portions can be each formed with a hole portion extending from an outer peripheral surface of the terminal member toward the cylindrical member, and a hard member having entered an outer periphery of the cylindrical member from the terminal member to the cylindrical member. The hole portion extending from the outer peripheral surface of the terminal member toward the cylindrical member can be the hole portion extending from the cylindrical member to the terminal member, and the hard member having entered the cylindrical member from the terminal member can be the hard member which fills the hole portion. In this embodiment, fixing portions 5 are formed with hole portion 5A and hard member 5B which has a cylindrical shape. Hard member 5B fills hole portion 5A such that hard member 5B fills the region from through hole 5A1 to recess 5A2. Hole portion 5A includes through hole 5A1 which extends from an outer peripheral surface of outer cap 3 to inner-diameter portion 3A, and recess 5A2 which is provided in an outer peripheral surface of outer casing2. In this embodiment, hole portion 5A is formed with through hole 5A1 which opens from an outer peripheral surface of outer cap 3 to an inner peripheral surface thereof and recess 5A2. Recess 5A2 is generated by deformation of a part of third layer 21C of outer casing 2 by hard member 5B as described later. For hole portion 5A, through hole 5A1 and recess 5A2 may be formed individually or integrally. Moreover, the configuration of the fixing portion is not limited to the present embodiment as long as the fixing portion is configured to extend from an outer side of the terminal member to the cylindrical member and to fix the terminal member relatively immovable from the cylindrical member. For example, a configuration may be employed in which a hole is filled with an adhesive.

Hole portions 5A are provided so as to communicate with outer casing 2 through outer cap 3. Hole portions 5A is extending in a direction intersecting a thickness direction of thickness of outer casing 2, and are provided on one side and the other side of the width direction of outer casing 2. Hole portions 5A are provided in four positions, upper left, upper right, lower left, and lower right positions in a horizontal cross-sectional view as illustrated in FIG. 2. As illustrated in FIG. 3A, hole portions 5A are provided in two rows in the longitudinal direction and provided in eight positions in total. Hole portions 5A are each formed so as to become a cylindrical space. Note that, the number, shape, and position of a hole(s) forming a fixing portion is not particularly limited as long as the hole(s)can fix the terminal member such that the terminal member is relatively immovable with respect to the cylindrical member.

Hard members 5B are members which fill hole portions 5A, and in this embodiment, hard member 5B is formed in a cylindrical shape having a diameter larger than a diameter of hole portion 5A. Hard member 5B is composed of a material having a higher degree of hardness than a synthetic resin forming outer casing 2. Examples of the materials having a higher degree of hardness than the synthetic resin forming outer casing 2 include: (1) a resin which is a synthetic resin of the same type as the synthetic resin forming outer casing 2 and outer cap 3 and which has a higher density than the synthetic resin forming outer casing 2 and outer cap 3; (2) a resin which is a synthetic resin of a different type from the synthetic resin forming outer casing 2 and which has a high rapture strength; and (3) a material of a different type having a higher degree of hardness than a synthetic resin (such as metal). Note that, the quality of the material of the hard member is not particularly limited, and for example, a metal or resin can be used to form the hard member, and can be appropriately selected depending on a load to be applied to outer casing 2 and outer cap 3. Moreover, a pin may be pushed into outer cap 3 from an outer peripheral surface of outer cap 3, and thus, the resin material of outer cap 3 is compressed and the rapture strength increases, and the compressed resin material is then wedged into outer casing 2 from outer cap 3, and thus it is made possible to bear the load which applies to outer casing 2 and outer cap 3.

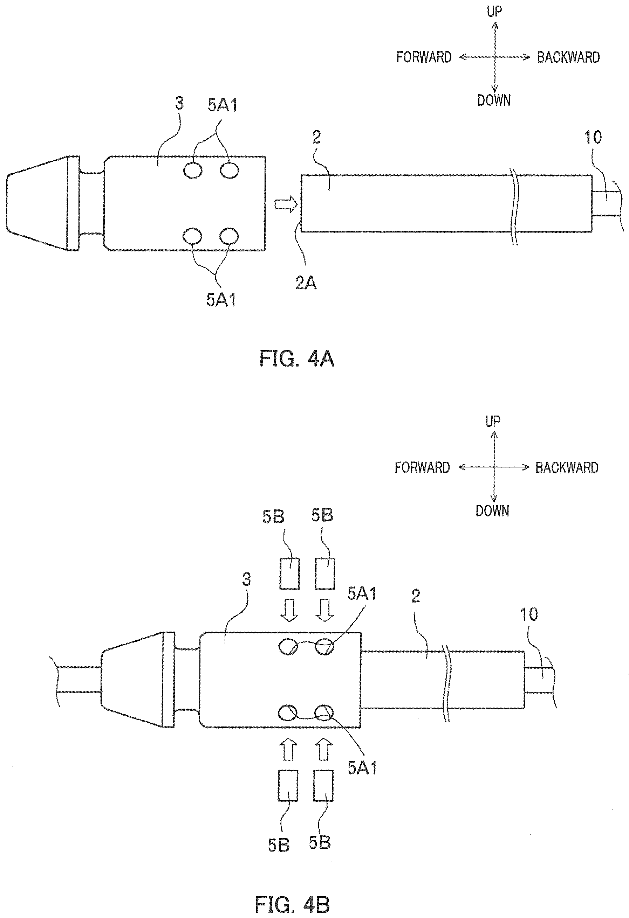

Next, an example of a method for forming a fixing structure which fixes outer cap 3 to outer casing 2, using fixing portions 5, will be described using FIGS. 4A and 4B. End portion 2A of outer casing 2 in which through holes 5a serving as a part of hole portions 5A described above is formed is inserted through inner-diameter portion 3A of outer cap 3. End portion 2A of outer casing 2 is in contact with contact surface 3D. Inner cable 10 which is inserted through the inside of outer casing 2 is then inserted through small-diameter portion 3C of outer cap 3 and led out to the outside of outer cap 3. A clearance is provided between inner-diameter portion 3A of outer cap 3 and an outer peripheral surface of outer casing 2 such that outer cap 3 is easily inserted through outer casing 2. The clearance herein is formed to have a size smaller than 0.2 mm.

Moreover, a clearance is provided between inner cable 10 and outer casing 2, and also between an outer peripheral surface of inner cable 10 and an inner peripheral surface of small-diameter portion 3C. With this configuration, inner cable 10 can reciprocate inside outer casing 2 and inside small-diameter portion 3C of outer cap 3.

Next, hard members 5B are inserted into through holes 5A1 from the outer peripheral surface of outer cap 3. More specifically, a cross-sectional diameter of each hard member 5B is larger than a hole diameter of through hole 5A1, and thus, hard member 5B is press-fitted into through hole 5A1. In this embodiment, through holes 5A1 are provided in eight positions, and hard members 5B are press-fitted into through holes 5A1, respectively. In a cross-sectional view illustrated in FIG. 3B, hard members 5B are respectively press-fitted into through holes 5A1 in four positions, upper right, lower right, upper left, and lower left positions. The direction in which hard members 5B are press-fitted is substantially parallel to axis line L1 passing through the center of a horizontal cross-section of outer casing 2 herein because hard members 5B are respectively guided by through holes 5A1.

When press-fitting of each hard member 5B is continued, a leading end of hard member 5B reaches first layer 21A of outer casing 2. When the press-fitting of hard member 5B is further continued, hard member 5B is wedged into first layer 21A. Thus, recess 5A2 described above is formed in first layer 21A, and thus, hole portion 5A is formed, and hard member 5B serves as a wedge between first layer 21A of outer casing 2 and outer cap 3. Thereby, outer cap 3 is fixed to be relatively immovable with respect to outer casing 2.

As described above, in the fixing structure according to the present embodiment, fixing portions 5 are provided so as to extend in a direction intersecting a thickness direction of the thickness of outer casing 2 and are also provided on one side and another side of the width direction of outer casing 2. Thus, outer casing 2 can be held by both fixing portions 5 in the fixing structure according to the present embodiment even when a wedged amount of hard member 5B is reduced, as compared with a case where a fixing portion is provided so as to extend in a thickness direction of the thickness of outer casing 2 (provided such that hard member 5B is press-fitted in a direction orthogonal to the tangent line of the outer peripheral surface) as in the related art. Accordingly, since the wedged amount of hard member 5B can be small, deformation of the shape of outer casing 2 by swaging can be suppressed. Consequently, it is made possible to prevent a decrease in the sliding resistance of inner cable 10 and to eliminate the need for performing accuracy management as strictly as heretofore, and this makes possible easy manufacturing.

Moreover, as illustrated in FIG. 2, hard members 5B extend in a direction intersecting a thickness direction of the thickness of outer casing 2 and suppress deformation of outer casing 2. More specifically, as compared with a case where hard members 5B are press-fitted in a direction orthogonal to the tangent line of the outer peripheral surface, the impact on the inner-diameter portion of outer casing 2 is reduced, and deformation of outer casing 2 can be suppressed. Thus, the need for performing accuracy management as strictly as heretofore is eliminated, and easy manufacturing is made possible. More specifically, as compared with the case where hard members 5B are press-fitted in the direction orthogonal to the tangent line of the outer peripheral surface, the wedged amount of each hard member 5B can be large. Thus, the need for performing the accuracy management for press-fitting as strictly as heretofore is eliminated, and easy manufacturing is made possible.

Hole portions 5A and hard members 5B which fill hole portions 5A are provided substantially parallel to axis line L1 passing through the center of a horizontal cross-section of outer casing 2. The direction which is substantially parallel to axis line L1 is a direction orthogonal to the longitudinal direction of outer casing 2, and is capable of receiving a force of forward movement of outer casing 3 and also a force of backward movement thereof. Thus, movement of outer cap 3 in a direction in which outer cap 3 separates from end portion 2A of outer casing 2 is suppressed, and the strength against separation is improved.

Moreover, since hole portions 5A and hard members 5B which fill hole portions 5A extend mutually in the same direction and parallel to each other, the force of forward movement of outer cap 3 and the force of backward movement thereof can be received by a larger number of fixing portions 5. Thus, the movement of outer cap 3 in the direction in which outer cap 3 separates from end portion 2A of outer casing 2 is suppressed, and the strength against separation is improved. Moreover, since hole portions 5A and hard members 5B which fill hole portions 5A extend mutually in the same direction and parallel to each other, the directions in which hard members 5B are press-fitted also become identical and parallel to each other. Thus the need for turning outer casing 2 and outer cap 3 is eliminated when hard members 5B are press-fitted. With this configuration, one operation process can be omitted as compared with a fixing structure in which the hard members are press-fitted in the direction orthogonal to the tangent line of the outer peripheral surface and a plurality of fixing portions are not present in a coaxial direction, and as a result, easy manufacturing is made possible.

As described above, the fixing structure according to the present embodiment includes outer casing 2 in which at least end portion 2A is hollow, and outer cap 3 which is attached to end portion 2A, and also includes a plurality of fixing portions 5 which extend from an outer side of outer cap 3 to outer casing 2. Fixing portions 5 extend in a direction intersecting a thickness direction of thickness of outer casing 2 and are provided on one side and another side of a width direction of outer casing 2. With this configuration, since the volume of outer casing 2 in contact with hard members 5B becomes large, accuracy required for press-fitting decreases, and thus, easy manufacturing is made possible.

Furthermore, fixing portions 5 are formed with hole portion 5A which passes through outer casing 2 and outer cap 3, and hard member 5B which fills hole portion 5A.

Moreover, the direction in which at least one of fixing portions 5 extends is substantially parallel to axis line L1 passing through the center of a horizontal cross-section of outer casing 2. With this configuration, the movement of outer cap 3 in the direction in which outer cap 3 separates from end portion 2A of outer casing 2 is suppressed, and thus, the strength against separation is improved.

### <Variation>

A description about a variation of the fixing structure of the present invention will be given.. Major differences between a fixing structure according to this variation and the fixing structure described above are the configuration of a fixing portion and the method for forming the fixing portion. More specifically, the major changes are described below, (1) an outer cap without a through hole is used and (2) a fixing portion is used, which is formed by causing a hard member to enter an outer periphery of the cylindrical member from the terminal member to the cylindrical member by causing the surface of the outer cap to deform by pushing the surface thereof with a needle-like member. Other changes are similar to the fixing structure according to the embodiment described above except for the points mentioned herein. Accordingly, while the description of the same points is omitted, the method for forming the fixing structure will be described together with the configuration of the fixing portion.

The method for forming the fixing structure will be described, first. As in the case described above, an end portion of an outer casing is inserted through an inner-diameter portion of an outer cap. Subsequently, as described above, a needle-like member which is harder than the outer cap is pushed at a predetermined position of an outer peripheral surface of the outer cap. The position pushed by the needle-like member is a position where the fixing portion is desirably formed, and is the position similar to the position where through hole 5A1 is formed in the above embodiment. The pushing direction of the needle-like member is also similar to the direction in which through hole 5A1 described above extends.

When pushing of the outer cap by the needle-like member is started, the pushed region of the outer cap deforms, and a hole portion along the needle-like member is formed. Meanwhile, the synthetic resin which has been present in the position where the hole portion is formed is compressed and pushed out in a moving direction of the needle-like member, and thus, a protrusion protruding from an inner peripheral surface of the outer cap in the pushing direction of the needle-like member is formed. The protrusion is wedged into the outer casing in the direction in which the hole portion extends from the outer surface of the outer casing. Thus, the depression mentioned above is formed in the surface of the outer casing and the protrusion which is harder than the outer casing enters the outer periphery of the outer casing and thus becomes as a wedge between the outer casing and the outer cap. As described above, the outer cap is fixed to be relatively immovable with respect to the outer casing because the hard member enters the outer periphery of the outer casing from the outer cap. Note that, the pushing amount of the needle-like member is adjusted such that the protrusion protrudes, so as not to pass through the outer cap and such that the fixing of the outer casing and the outer cap by the fixing portion has a practical strength. Moreover, as long as a desired protrusion is obtainable, the shape, diameter, and the degree of hardness of the needle-like member are appropriately selectable, and the leading end of the needle-like member does not have to be sharp. Note that, in the embodiment described above, the fixing structure of this variation is practically the same in terms of meaning as a structure which a hard member is inserted into the hole portion that is above described through hole, and which a recess that is provided in an outer peripheral surface of the above described outer casing is filled by the hard member. The hard member used here has a length shorter than the depth of the above described hole portion and has a circumferential directional shape similar to the cross-sectional shape of the hole portion descried above and is formed with a compressed member which is formed of the same material as the outer cap described above.

The fixing structure of this variation is a fixing structure which includes a cylindrical member in which at least an end portion is hollow, and a terminal member attached to the end portion, and also includes a plurality of fixing portions extending from an outer side of the terminal member to the cylindrical member. In this structure, the fixing portions extend in a direction intersecting a thickness direction of thickness of the cylindrical member and are provided on one side and another side of a width direction of the cylindrical member, and the fixing portions protrude from an inner peripheral surface of the terminal member by deformation of the terminal member and are protrusions wedged into the cylindrical member.

As described above, in this variation, manufacturing is easy because the fixing portions are each formed by compressing the terminal member in a spot, and manufacturability is favorable because there is no need to use a member other than the terminal member and the cylindrical member.

In this variation, as a material of the outer casing, a material having toughness, such as a nylon resin may be used in order to suppress breakage of the outer cap during pushing with the needle-like member. Note that, in this variation, the strength of the protrusions is improved by compressing a material forming the outer cap, but in a case where the strength of the outer cap is high enough, for example a resin in which fine glass members are dispersed is used, the material forming the outer cap does not have to be compressed.

As described above, in this variation, manufacturing is easy because the fixing portions are each formed by compressing the terminal member in a spot, and manufacturability is favorable because there is no need to use a member other than the terminal member and the cylindrical member.

### Reference Signs List

1 Control cable
2 Outer casing (cylindrical member)
3 Outer cap (terminal member)
5 Fixing portion
5A Hole portion
5A1 Through hole
5A2 Depression
5B Hard member
10 Inner cable

## Claims

1. A fixing structure comprising;
a cylindrical member in which at least an end portion is hollow, and
a terminal member attached to the end portion, wherein
the fixing structure comprises a plurality of fixing portions extending from an outer side of the terminal member to the cylindrical member, wherein;
the fixing portions extend in a direction intersecting a thickness direction of thickness of the cylindrical member and the fixing portions are provided on one side and another side of a width direction of the cylindrical member.

2. The fixing structure according to claim 1, wherein the fixing portions are each formed with a hole portion and a hard member, the hole portion extending from an outer peripheral surface of the terminal member toward the cylindrical member, the hard member having entered an outer periphery of the cylindrical member from the terminal member to the cylindrical member.

3. The fixing structure according to claim 2, wherein a direction in which at least one of the fixing portions extends is substantially parallel to an axis line passing through a center of a horizontal cross-section of the cylindrical member.

4. The fixing structure according to any one of claims 1 to 3, wherein the fixing portions extend mutually in an identical direction and extend parallel to each other.

5. A control cable comprising
an inner cable and
the fixing structure according to claims 1 to 4, wherein;
the cylindrical member is an outer casing through which the inner cable is inserted, and
the terminal member is an outer cap.
